Europäisches Patentamt

European Patent Office

Office européen des brevets

(19)

(11) **EP 1 199 674 A2**

(12) **EUROPEAN PATENT APPLICATION**

(43) Date of publication:
**24.04.2002 Bulletin 2002/17**

(51) Int Cl.[7]: **G06K 9/26**

(21) Application number: **01124705.3**

(22) Date of filing: **16.10.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Takiguchi, Yuji**<br>**Suwa-shi, Nagano-ken, 392-8502 (JP)** |
| (30) Priority: **16.10.2000 JP 2000315823** | (74) Representative: **Hoffmann, Eckart, Dipl.-Ing.**<br>**Patentanwalt,**<br>**Bahnhofstrasse 103**<br>**82166 Gräfelfing (DE)** |
| (71) Applicant: **SEIKO EPSON CORPORATION**<br>**Shinjuku-ku, Tokyo 163-0811 (JP)** | |

(54) **Method and apparatus for magnetic pattern recognition and data storage medium carrying computer program means for implementing the method**

(57)    Number, symbol, and letter characters encoded by a magnetic pattern are recognized by generating an integrated wave from the magnetic waveform detected from the magnetic pattern, determining the effective range of the integrated wave for one character, and then recognizing the characters based on the effective range of the integrated wave and the relative position in the integrated wave of a concave curve influenced by the distance between adjacent ones of plural magnetized bars in the magnetic pattern.

FIG. 4

EP 1 199 674 A2

**Description**

The present invention relates generally to a magnetic pattern recognition method and an apparatus for carrying out the method. The invention relates, more particularly, to a method and apparatus for recognizing characters represented by or coded in the form of magnetic patterns. The magnetic patterns are composed of a sequence of spaced magnetized bars and the characters are numerals, letters or symbols.

Banks and other such financial institutions use magnetic pattern recognition devices to sort, tabulate, and otherwise help complete transactions by reading magnetic ink characters printed with magnetic ink on checks, for example. In addition to cash and credit cards, personal checks are widely used by consumers for making store purchases and paying bills. Information including the customer's account number and the check's serial number is printed on the face of the check using magnetic ink characters or, more specifically, using a Magnetic Ink Character Recognition Code (MICR code). Such MICR code can be read with a magnetic head so that the printed data can be referenced to, for example, confirm whether the check is valid.

Due to this use of checks, MICR readers (devices capable of reading MICR code) are now commonly found in point-of-sale (POS) stations. Many such MICR readers use a DC motor to transport the check while scanning the MICR code with the magnetic head for recognition.

Two of the most common MICR character fonts are the CMC7 font used primarily in Europe and South America, and the E13B font used primarily in North America. Use of the CMC7 font is assumed below.

The CMC7 font has 41 characters, 10 numerals, 5 symbols (special characters), and 26 letters. CMC7 characters are magnetic bar codes. More specifically, one character consists of seven bars forming six spaces (referred to as "bar spaces" below) of various widths between adjacent bars. A character is recognized from the combination of bar space widths. If N1 is the number of "wide" spaces and N0 is the number of "narrow" spaces in a CMC7 character, N1:N0 = 2:4 in numerals and symbols, and N1:N0 = 1:5 or N1:N0 = 3:3 in letters.

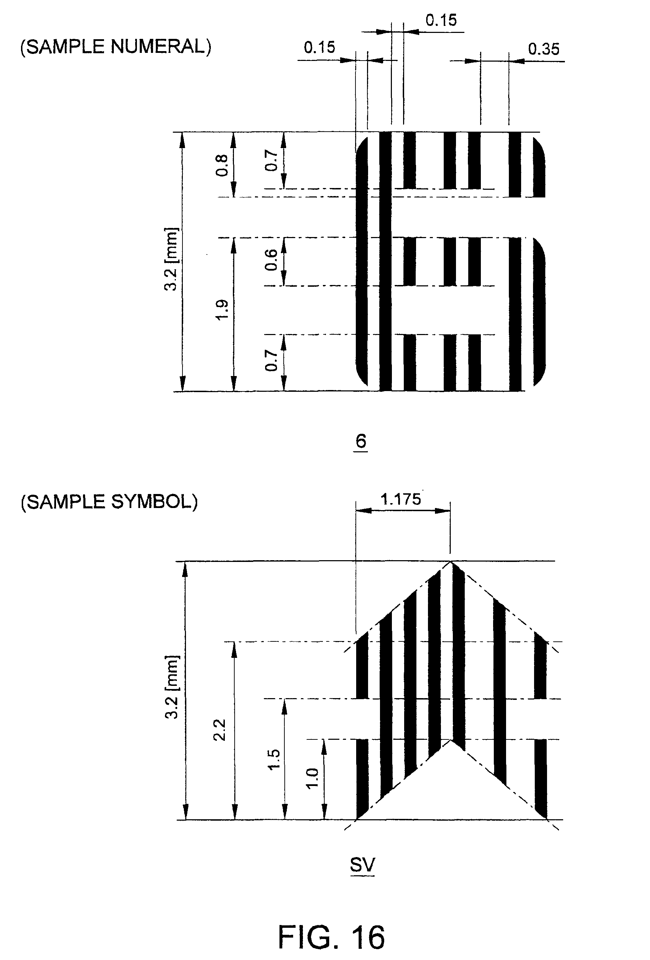

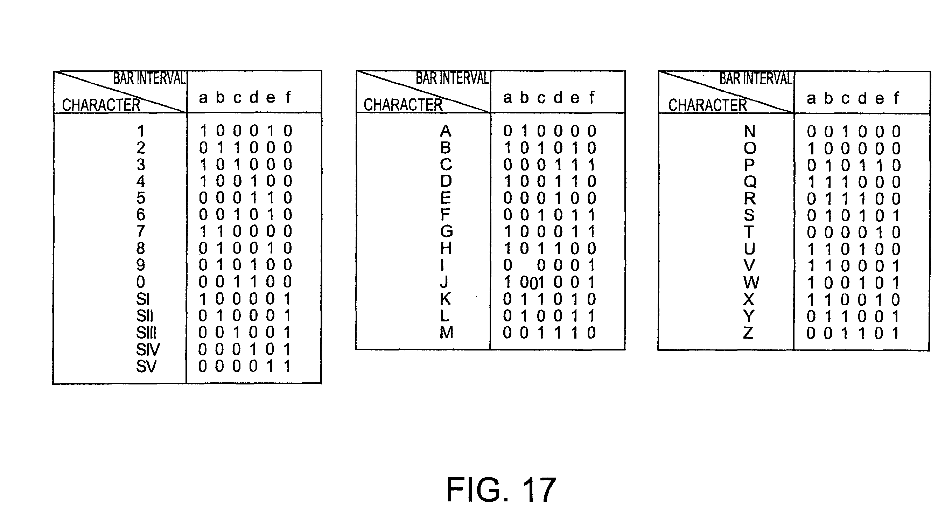

Fig. 16 shows the number 6 and the symbol SV of the CMC7 font. Fig. 17 is a table showing for each of the 41 CMC7 characters the respective combination of wide (=1) and narrow (=0) bar spaces, i.e., the respective "bar space pattern". The bar spaces are labelled a through f from the left to the right side of a CMC7 character, and are read from left to right in the bar space pattern. Each character has a standardized shape. The standard bar width is 0.15 mm, narrow bar spaces are 0.15 mm wide, and wide bar spaces are 0.35 mm wide.

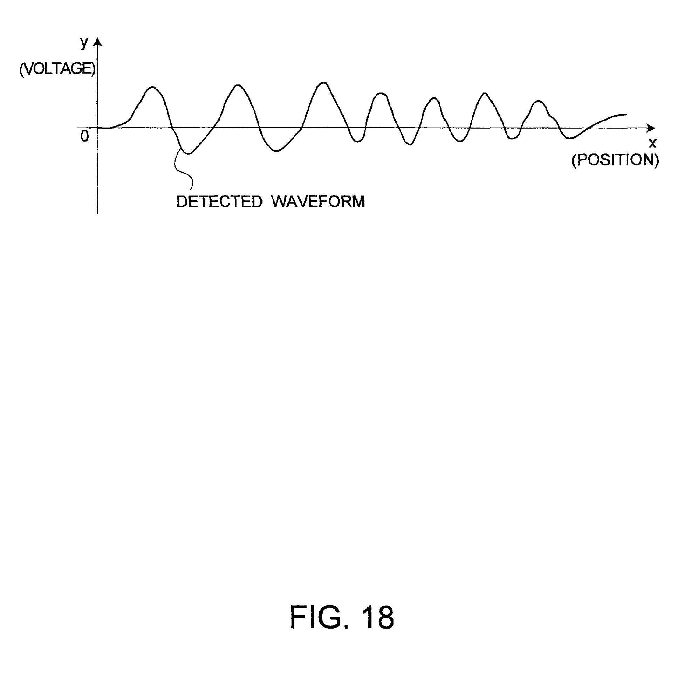

For reading the MICR code, the change in the flux density of the magnetized bars in each CMC7 character is detected and converted to a voltage change. The detected magnetic pattern is thus transferred to a differential voltage waveform with peak values at the edges of the bars. Fig. 18 shows such voltage waveform detected from a CMC7 character. Each character consists of seven bars, and the detected (induced) voltage waveform therefore has seven positive and seven negative peak values.

In magnetic pattern recognition the partial waveform representing the magnetic pattern of one character is extracted from the detected voltage waveform, and the partial waveform is integrated. The area of the space or surface (referred to as the "valley" below) inside a concave waveform portion formed by a minimum of the integrated waveform and the two maximums on either side of the minimum and a line joining the two maximums is dependent upon the widths of bar spaces in the magnetic pattern.

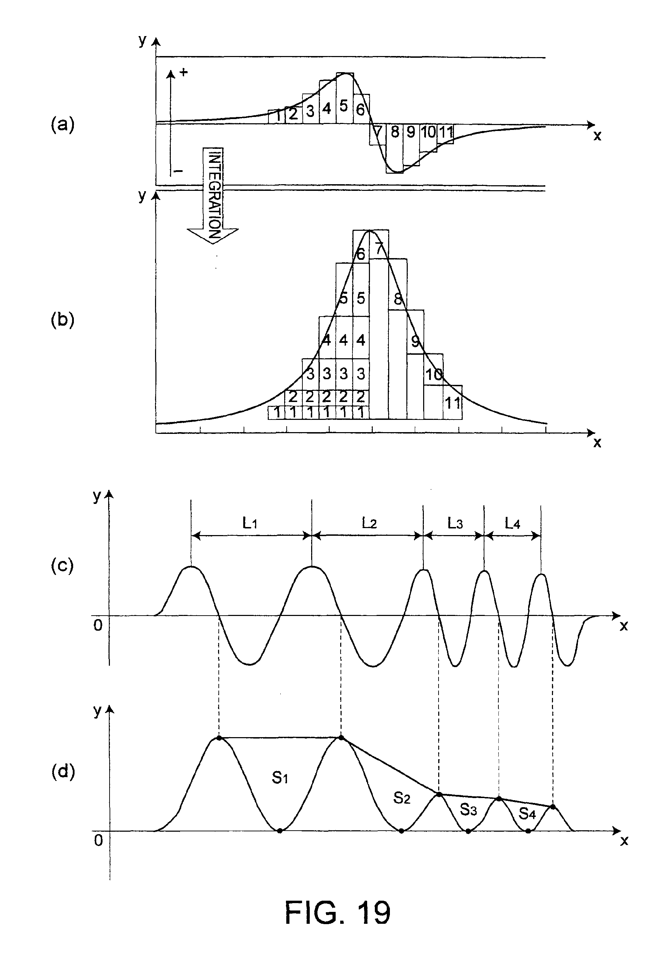

Fig. 19 illustrates a method for generating this integrated waveform. Fig. 19 (a) shows a typical (differential) waveform and Fig. 19 (b) shows the wave integration method. Fig. 19 (c) shows an example of a part of the detected waveform, and Fig. 19 (d) shows that waveform part integrated. As is well-understood and shown in Figs. 19 (a) and (b), the integrated waveform is essentially a graph of the values of the y coordinate of plural points in the wave accumulated sequentially to the right along the x axis.

As will be appreciated from Figs. 19 (c) and (d), the area of a valley in this integrated waveform depends upon the interval between the peaks of the partial waveform. That is, the areas of the valleys in the integrated waveform that are most affected by peak intervals L1, L2, L3, and L4 are S1, S2, S3, and S4. For example, valley area S1 is affected by peak intervals L1 and L2, but the effect of peak interval L1 is greater than that of peak interval L2. The area of a valley affected by a wide peak interval is greater than that affected by a narrow peak interval.

A wide peak interval means that the corresponding bar space of the magnetic pattern is wide. We therefore know that valleys affected by a wide bar space in the magnetic pattern are valleys with a great area.

It follows that the magnetic pattern can be recognized by means of the valleys in the integrated waveform derived from the detected voltage waveform instead of recognizing the magnetic pattern from the peak intervals of the detected voltage waveform. In other words, the valleys are converted to a valley pattern of "deep" and "shallow" valleys based on the area of the valleys in the integrated wave, and characters are recognized based on a relative position of deep valleys within the valid range of the integrated wave. Note that a deep valley is a valley with a large area, and a shallow valley is a valley with a small area.

A problem with recognizing CMC7 characters based on the width of the peak intervals in the detected voltage waveform that represents the magnetic pattern is that if the check is creased so that magnetic pattern gaps are apparently narrower than the actual width of the bar spaces, recognizing the CMC7 characters may not be possible or character recognition errors occur. To avoid this problem we proposed a method for recognizing CMC7 characters based on the valleys of the integrated waveform as explained above.

Various magnetic materials are used in the magnetic heads employed in magnetic pattern recognition devices, including Permalloy, the major constituents of which are iron (Fe) and nickel (Ni), and Sendust, the major constituents of which are iron (Fe), silicon (Si), and aluminum (Al). The detected voltage waveform, and, therefore, the resulting integrated waveform differ depending on the magnetic materials used.

In the proposed method, characters are recognized by obtaining the width of the integrated waveform for a respective character by measuring the length between the point at the right end of the waveform where the height is equal to the depth of the deep valley at the right end and the point at the left end of the waveform where the height is equal to the depth of the deep valley at the left end, and determining the positions of the deep valleys within this integrated wave width. Because the integrated wave depends on the magnetic material used in the magnetic head employed for scanning the MICR code, the positions of the deep valleys relative to the width of the integrated waveform, which is calculated based on the integrated waveform, also depends on the magnetic material used.

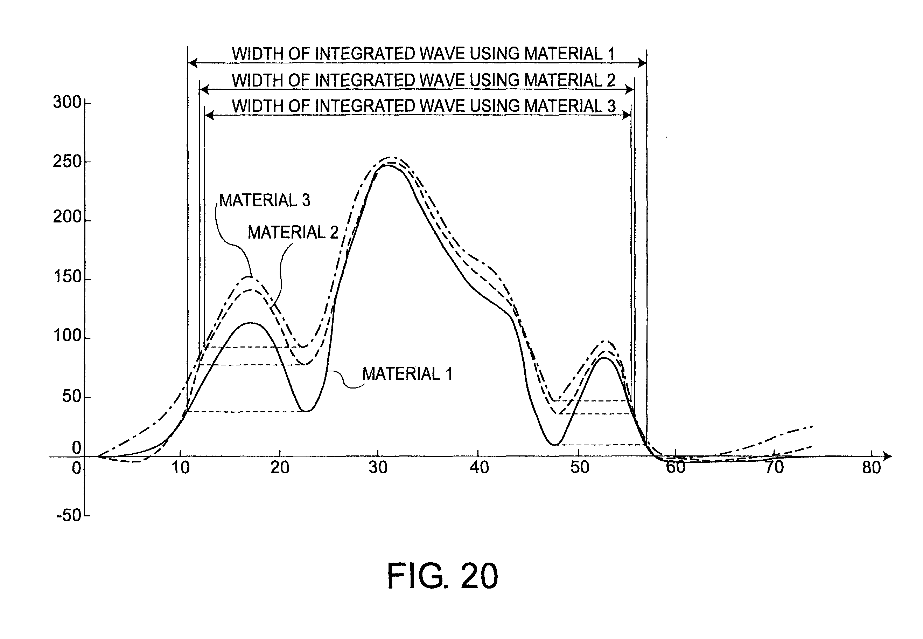

Fig. 20 shows differences in the integrated wave as a result of different magnetic materials used in the magnetic head. Materials 1 and 2 are Permalloy type magnetic materials; material 3 is a Sendust type magnetic material. Magnetic materials with great magnetic susceptibility are affected by the magnetic field from plural bars in the magnetic pattern, and the depth of the deep valleys in the integrated wave becomes shallow. The width of the integrated wave thus differs according to the type of magnetic material (characteristics of the magnetic head) used in the magnetic head of the magnetic pattern recognition device.

When the relative positions of deep valleys in the integrated wave width are calculated and characters are recognized based on the relative positions, a problem arises in that if this width, i.e., the effective range of the integrated waveform (that is, the range of the integrated wave that is useful for character recognition) becomes small, the error in the relative positions becomes great and character recognition may not be possible or character recognition errors occur. Furthermore, if the effective range of the integrated waveform becomes smaller than the range expected from the magnetic pattern and the configuration of the magnetic pattern recognition device, the integrated waveform will not be recognized as a normal waveform. More specifically, characters cannot be recognized or recognition errors occur depending upon the type of magnetic materials used in the magnetic head of the magnetic pattern recognition device. For example, characters that can be recognized by a magnetic pattern recognition device using material 1 in Fig. 20 in the magnetic head may not be recognized by a magnetic pattern recognition device using material 3 in the magnetic head.

An object of the invention is to solve the above problem by providing a magnetic pattern recognition method for recognizing, irrespective of the type of magnetic material used in the magnetic head, a character represented by a magnetic pattern from the relative position of valleys based on the effective range of the integrated waveform of the detected voltage waveform of the magnetic pattern. A further object is to provide a data storage medium carrying computer program code means for implementing the method, and an apparatus for carrying out the method.

These objects of the invention are achieved with a method as claimed in claim 1, a data storage medium as claimed in claim 7, and an apparatus as claimed in claim 9, respectively. Preferred embodiments of the invention are subject-matter of the dependent claims.

By calculating the range of an integrated wave that is effective for detecting one character (referred to as the "effective range of the integrated wave" below) in the voltage waveform detected from a magnetic pattern, based on the slope of the integrated wave, the effective range of the integrated wave can be determined irrespective of the influence of the magnetic material used in the magnetic head on the depths of valleys in the integrated wave. More specifically, characters can be recognized by calculating the relative positions of valleys in this effective range of the integrated wave.

Furthermore, because character recognition is possible irrespective of the type of magnetic material used in the magnetic head, a magnetic head made with low-cost magnetic materials can be used to provide a low-cost magnetic pattern recognition apparatus (MICR reader).

The magnetic pattern recognition method according to the invention can be achieved by running a corresponding program carried on some kind of data storage medium, such as a compact disc (CD), a floppy disc, a hard disc, a magneto-optical disc, a digital video/versatile disc (DVD), a semiconductor memory, or a magnetic tape.

Other objects and attainments together with a fuller understanding of the invention will become apparent and appreciated by referring to the following description of preferred embodiments and claims taken in conjunction with the accompanying drawings.

BRIEF DESCRIPTION OF THE DRAWINGS

Fig. 1                     is an perspective view of a printer as one embodiment of an apparatus according the present invention;

Fig. 2                     is a block diagram of the printer shown in Fig. 1;

Fig. 3                     is a block diagram of the character recognition function of the printer shown in Fig. 1;

Fig. 4                     is a flow chart of the character recognition process;

Fig. 5                     is a flow chart of the magnetic pattern identification process;

Fig. 6                     is a flow chart of the effective range calculating routine;

Fig. 7                     shows correcting the slope of the integrated wave;

Fig. 8                     shows smoothing of the integrated wave;

Fig. 9                     shows normalization of the integrated wave;

Fig. 10                    shows a valley search range;

Fig. 11(a)                 shows the area of a valley, and (b) shows an approximation of the area;

Fig. 12                    shows valley classification based on the value of a valley evaluation function;

Fig. 13(a)                 shows the true minimum, and (b) shows the slope of a quadratic curve used for approximation;

Fig. 14                    shows a method for calculating relative positions of valleys when the valley pattern contains two deep valleys;

Fig. 15(a) and (b)         are diagrams for explaining recognition of CMC7 characters;

Fig. 16                    shows a CMC7 character for a numeral and a symbol;

Fig. 17                    is a bar space pattern table for CMC7 characters;

Fig. 18                    shows the detected voltage waveform for a CMC7 character;

Fig. 19(a),(b), (c), and (d)   are diagrams for explaining the integration of the detected voltage waveform; and

Fig. 20                    shows differences in the integrated waveform due to different magnetic materials magnetic heads used for detecting the magnetic patterns.

As a preferred embodiment, the magnetic pattern recognition according to the present invention is described below as being implemented in a printer. The printer represents one example of an apparatus adapted to carry out the recognition method of the invention while being also capable of performing one or more additional functions, namely printing in this example.

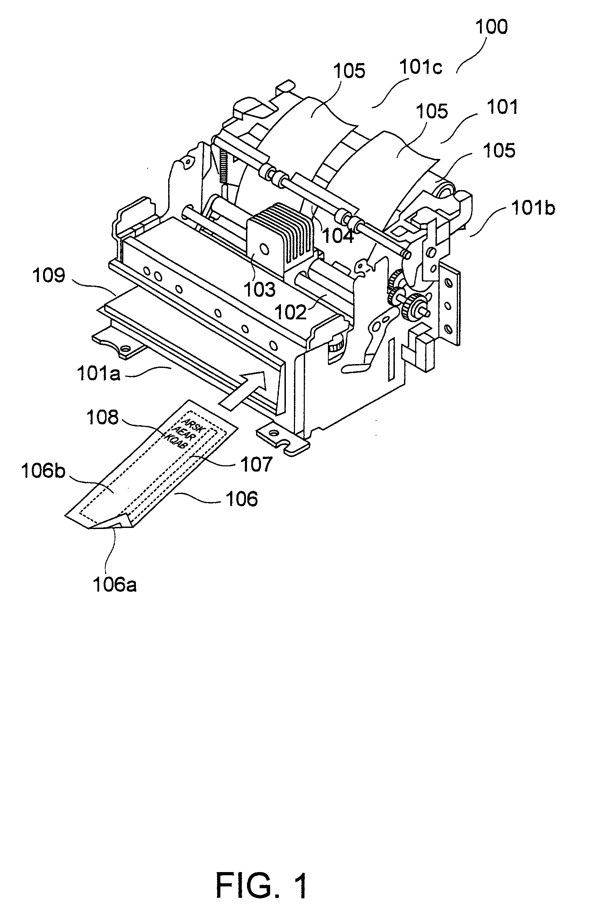

Fig. 1 is an perspective view of the printer. Printer 100 is adapted to print on roll paper 105 or cut-sheet paper 106 by means of a print head 103 that travels along a guide shaft 102 sideways to a body 101. The print head 103 in this example is a wire dot print head, so printer 100 is a dot impact printer. The type of the printer is not essential to the present invention and a thermal printer or any other type could be used instead of a dot impact printer. The print head 103 is moved by a print head transportation mechanism using a timing belt and a pulse motor. The print head 103 can thus be moved to a specified position to the right or to the left along the guide shaft 102 to print at that position on paper 105 or 106. The paper 105 or 106 is fed perpendicularly to the axis of the guide shaft 102 by a paper feed mechanism including a feed roller group further described below and a paper feed pulse motor. The roll paper 105 is supplied from a paper roll at the back 101b of the body 101 and is conducted through a gap between a platen 104 and the print head 103 to the top 101c of the body 101. Two paper rolls can be loaded in the printer 100 in this example. When the printer is used in a store the paper from one paper roll can be used to record the store journal and the paper from the other paper roll can be used for printing sales receipts.

This printer 100 is also able to process cut-sheet paper 106. Paper 106 travels from an insertion opening 109 at the front 101 a of the body 101 through a paper path further described below to and through the gap between the print head 103 and platen 104. When printing is completed, the paper 106 is ejected to the top 101c of the printer.

Without imposing any restriction regarding the type of paper or other recording medium that can be used with printer 100, a personal check is used as a representative for cut-sheet paper throughout the following description unless stated otherwise. A check 106 such as referenced in this embodiment is a personal check issued or approved by a bank or other financial institution and used to make payments in a store, for example. An MICR code 107 containing the user's account number and other information and composed of magnetic ink characters of the CMC7 font (CMC7 characters) is printed on the face 106a of the check 106.

The shape and print quality of CMC7 characters as well as the location of the MICR code 107 on the check are standardized. A waveform corresponding to the magnetic pattern of the MICR code can be obtained by scanning this specific part of the check with a magnetic head, and the printed data can then be recognized from this waveform. The MICR code is remagnetized by moving it past while exposing it to a permanent magnet before it is scanned by the magnetic head.

The face amount (check amount), the payee, and the payer's signature are written on the face 106a of the check 106. An endorsement 108 is written on the back 106b of the check 106. The endorsement 108 includes the date the check was deposited, the payee's (store's) name, and the check amount. When a sales clerk receives a personal check, the data recorded in the MICR code is used to determine whether the check is valid, and the endorsement 108 is printed on the back 106b if the check is confirmed to be valid.

The check 106 is inserted into the printer 100 with the back 106b up so that the endorsement 108 can be printed by the print head 103. This means that when the check 106 is inserted into the insertion opening 109, the MICR code 107 is facing down and aligned to the right side of the printer.

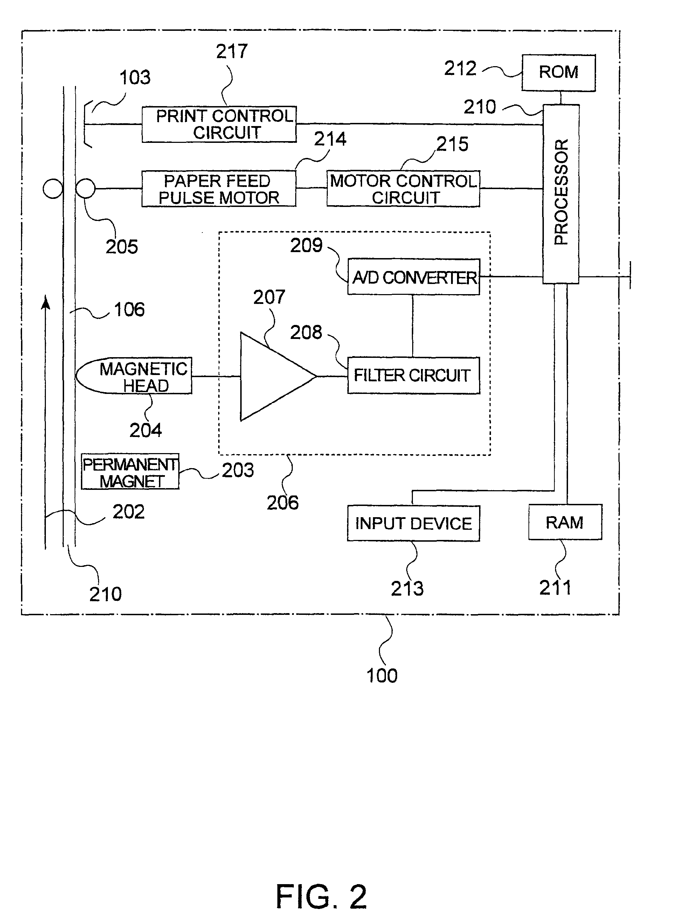

Fig. 2 is a block diagram of printer 100 and shows the configuration of the parts disposed along the paper path 202 of the printer 100 and relating to the CMC7 character recognition process.

Starting from the insertion opening 109, a permanent magnet 203 for remagnetizing the MICR code printed on the check 106 and a magnetic head 204 for converting the magnetic pattern of the MICR code into an electrical waveform signal are arranged along the paper path 202 in this order. A check 106 inserted into the insertion opening 109 is held between paper feed rollers 205 and guided along the paper path 202 while passing the permanent magnet 203 and then the magnetic head 204 so that the MICR code on the check 106 is detected. The print head 103 is also located along the paper path 202. When the account number and other information are confirmed from the MICR code, the check 106 is advanced further by the paper feed rollers 205 and the endorsement 108 is printed by the print head 103. MICR code reading and endorsement printing are thus a continuous operation.

When the MICR code passes the magnetic head 204 the head converts the detected magnetic pattern into a voltage waveform and sends the waveform through detection circuit 206 to processor 210. As explained before, the obtained waveform will vary slightly depending on the type of magnetic material used in the magnetic head 204.

The detection circuit 206 has an amplifier circuit 207, filter circuit 208, and A/D converter 209. The amplifier circuit 207 amplifies the small voltage changes induced in the magnetic head by the changes in the magnetic flux density of the magnetic patterns of the MICR code. The filter circuit 208 removes extraneous signals resulting from noise and MICR code printing errors. The filter circuit 208 is designed to remove extraneous signals from the magnetic head 204 using a cut-off frequency determined by the check feed speed and the length of the sequence intervals according to the CMC7 font standard. The A/D converter 209 converts the analog waveform signal passed from the filter circuit 208 into digital waveform data (waveform sample values). The processor 210 stores the waveform data and detection conditions in RAM 211. The waveform data are the basis for the following data processing which is, thus, performed in the digital domain in this embodiment. Hence, where the following explanation uses terms like wave, waveform etc. it actually means the respective waveform sample values.

The evaluation conditions for recognizing CMC7 characters are stored in ROM 212, but can be changed using input device 213 and the updated evaluation conditions are temporarily stored in RAM 211.

When the MICR code detection ends and all waveform data have been acquired, the CMC7 characters are recognized based on the waveform data, detection conditions and updated evaluation conditions temporarily stored in RAM 211, and the evaluation conditions stored in ROM 212.

When the character recognition process ends, the result is displayed or output to an external computer, for example. The detected waveform of the MICR code could, of course, be sent directly to the computer so that the computer runs the character recognition process.

The processor 210 of the printer 100 controls the paper feed rollers 205 and other parts of the paper feed mechanism, and controls the paper feed pulse motor 214 by way of motor control circuit 215. The paper feed pulse motor 214 is used for both MICR code scanning and printing. The processor 210 also controls the print control circuit 217 to effect printing by means of the print head 103.

The printer 100 of this embodiment is thus a combined apparatus capable of printing on checks or other cut-sheet paper as well as reading MICR codes printed on a check or other cut-sheet paper. The printer 100 is arranged so that a single transportation path is used to transport a check for both printing and MICR code reading. Reading the MICR code printed on a personal check and printing data to the personal check, particularly the endorsement in this example, can thus be completed as continuous sequential operations.

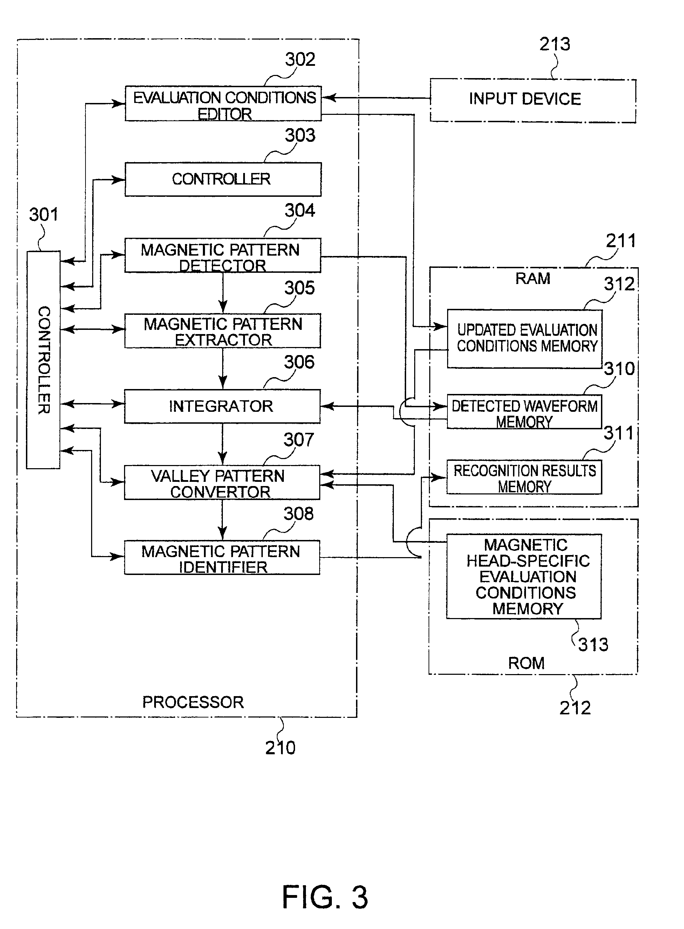

Fig. 3 is a block diagram of the character recognition function of printer 100. The processor 210 has a main controller 301, evaluation conditions editor 302, paper feed controller 303, pattern detector 304, pattern extractor 305, integrator 306, pattern converter 307, and pattern identifier 308.

Controller 303 controls the motor control circuit 215 so as to transport a check. The magnetic head 204 detects the MICR code on the check as the transported check passes the magnetic head 204. The voltage waveform output by the magnetic head 204 is applied through the detection circuit 206 to processor 210 as waveform data.

Pattern detector 304 temporarily stores the waveform data and detection conditions in a memory area 310 in RAM 211.

The evaluation conditions for recognizing the CMC7 characters, which are head-specific evaluation conditions, are stored according to the type of magnetic head in a memory area 313 in ROM 212. The evaluation conditions editor 302 can update these evaluation conditions as instructed via the input device 213. The updated evaluation conditions are stored according to the type of magnetic head in a memory area 312 in RAM 211.

When MICR code detection ends, the pattern extractor 305 detects the starting position of each individual CMC7 character in the waveform data stored in the memory area 310, and extracts the waveform data for each character.

The integrator 306 integrates the extracted waveform data of a respective character and then applies a correction process to the integrated waveform data to generate integrated and corrected waveform data referred to as "i-wave" below.

The space or surface formed by a concave waveform portion joining a minimum and the two maximums on either side thereof, and a line joining the two maximums is referred to herein as a "valley".

The pattern converter 307 then calculates the area of the valleys, and classifies the valleys into "deep" valleys and "shallow" valleys in accordance with the evaluation conditions in memory area 313 and updated evaluation conditions in memory area 312. This operation is referred to below as "pattern conversion".

The pattern identifier 308 of the processor 210 then calculates the position of the deep valleys in the i-wave, and calculates the effective range of the i-wave based on the evaluation conditions in memory area 313. Based on the calculated valley positions and effective range of the i-wave, the relative positions of the deep valleys within the effective range of the i-wave are determined. The CMC7 character is then recognized based on these relative valley positions and the evaluation conditions in memory area 313.

If the character is readily recognized by the pattern identifier 308, the recognition result is stored in a memory area 311 in RAM 211. If the pattern identifier 308 does not recognize the character, the check is transported past the magnetic head 204 again to re-scan the MICR code, or an error handling process is run to notify the operator that the character recognition is not possible, for example.

The controller 301 controls the interrelated operations of evaluation conditions editor 302, paper feed controller 303, pattern detector 304, pattern extractor 305, integrator 306, pattern converter 307, and pattern identifier 308.

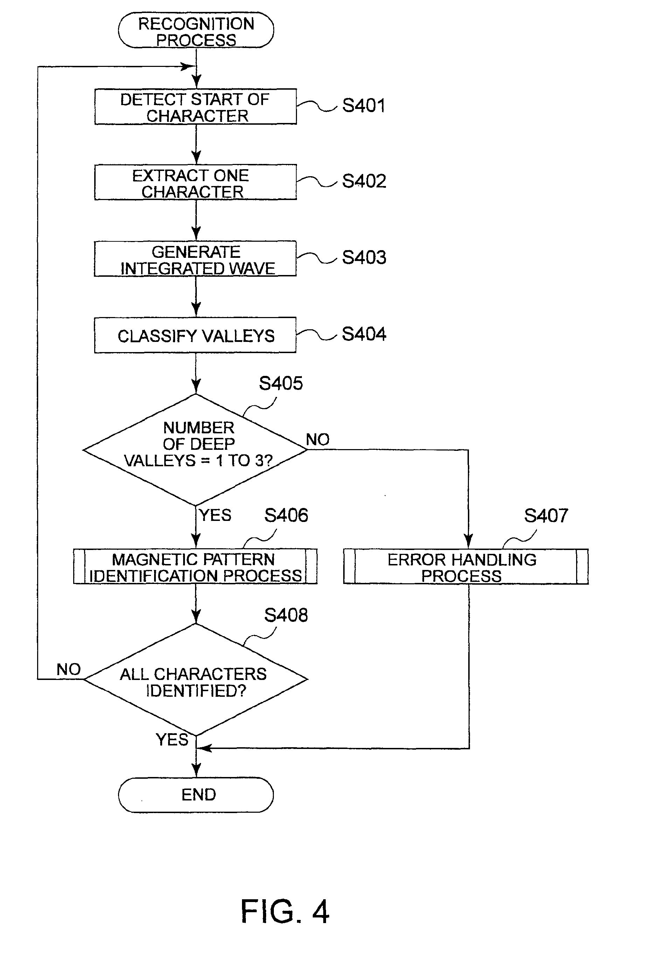

The magnetic pattern recognition process is described in detail next below with reference to the figures. Fig. 4 is a flow chart of the character recognition process in the printer 100 according to this embodiment of the invention.

The first step is to detect the start of a character in the waveform (waveform data, to be precise) stored in RAM 211 (step S401).

The partial waveform for one character is then extracted (step S402). As shown in Fig. 18, for example, the partial waveform for one character has seven positive and seven negative peaks. In the following description only the positive peaks are considered.

The partial waveform is then integrated and corrected to produce the i-wave (step S403). This integration has already been described above with reference to Fig. 19.

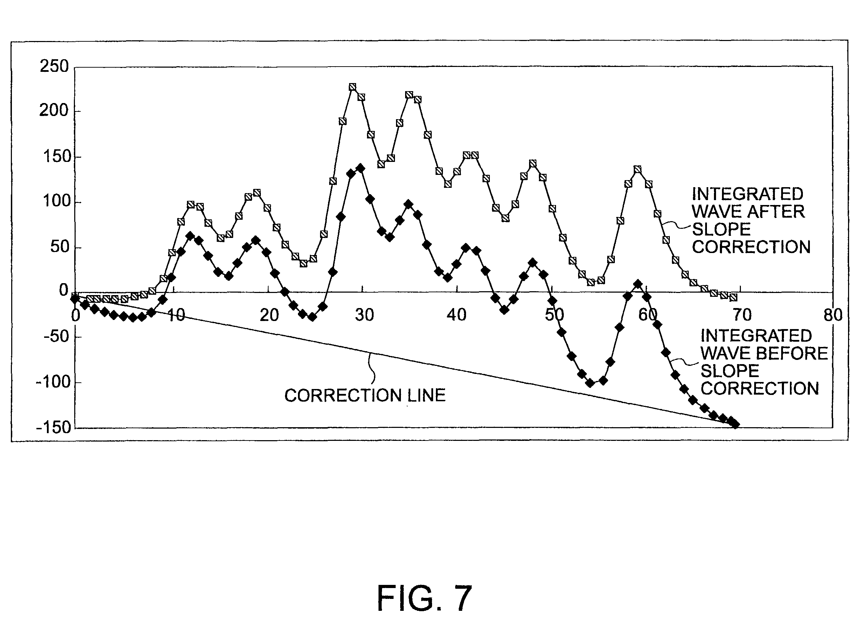

As shown in Fig. 19, the partial waveform for one character is integrated to generate an integrated wave. Differences between the area of positive regions and the area of negative regions in the integrated wave due to the characteristics of the magnet 203, the magnetic head 204 and the detection circuit 206 produce an integrated wave with a slope. Slope correction is then applied to compensate for this slope. This slope and its correction are illustrated in Fig. 7 showing a graph of the integrated wave in a Cartesian coordinate system. The "slope" is that of a line, denoted "correction line" in the figure, that connects the ends of the integrated wave. This slope is corrected by adding the absolute ordinate values of the correction line to the respective ordinate values of the integrated wave which results in a slope-corrected integrated wave resulting in a slope-corrected integrated wave.

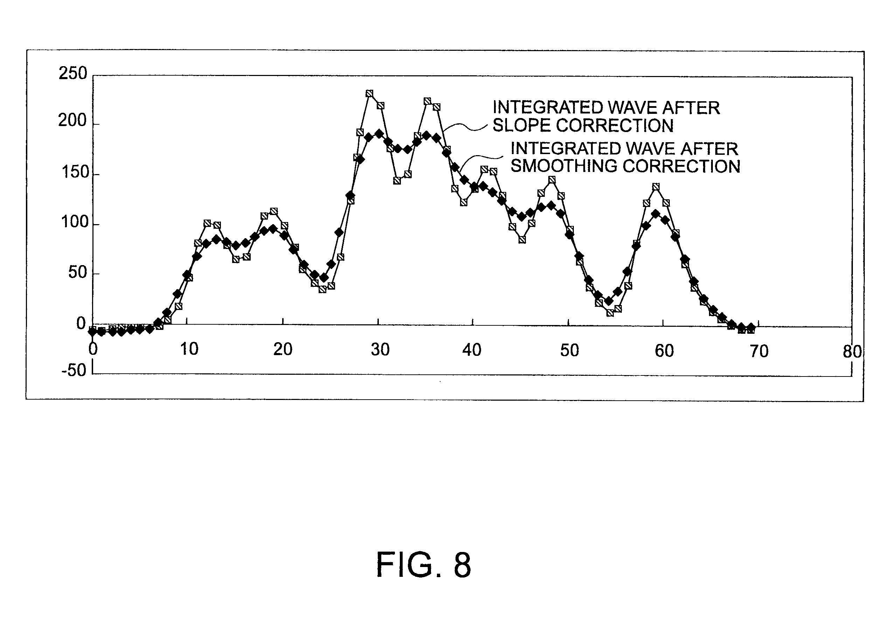

Smoothing is then applied to produce an integrated wave in which deep valleys are emphasized compared to shallow valleys. This smoothing process is shown in Fig. 8. Smoothing determines the average of a total of (2n + 1) points including a respective selected point on the integrated wave and n points (where n is an arbitrary integer value) on each side of the selected point and replaces the selected point by that average. The integrated wave is thus smoothed after slope correction, resulting in a smoothed, slope-corrected integrated wave. As will be appreciated from the figure, valleys with a large area are less affected by smoothing than valleys with a small area.

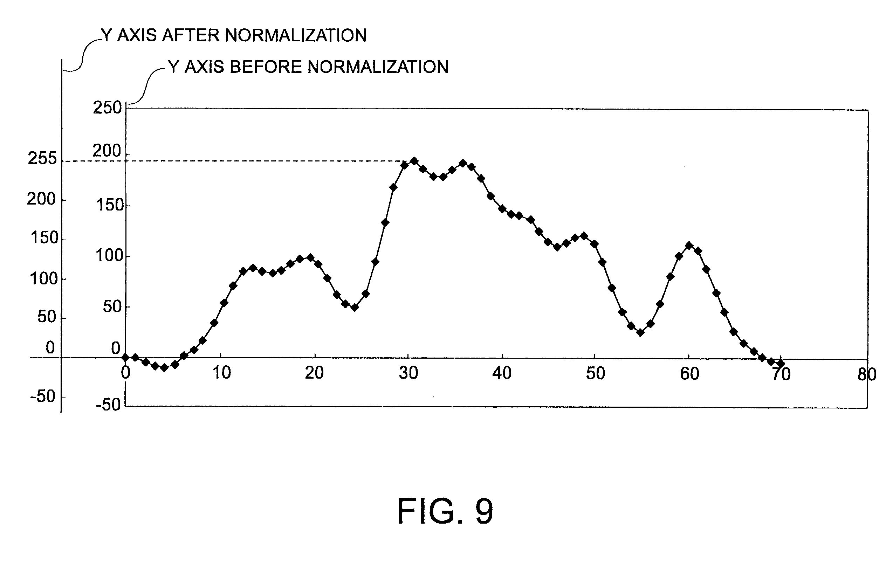

The height (ordinate) values of the smoothed integrated wave are then normalized to produce a normalized integrated wave. The height values are voltage values that are affected by the magnetic field strength of the magnetic patterns detected by the magnetic head. More specifically, waveforms detected from the same magnetic pattern will differ depending on the detection conditions, including the printing, of the MICR code. The normalization step therefore normalizes the integrated waves to the same height scale. As shown in Fig. 9, the height values of the integrated wave are normalized so that the value of the highest peak becomes the scale's maximum Vmax, which is Vmax = 255 in this embodiment of the invention. The resulting normalized integrated wave is the final result of step S403 of Fig. 4 and is what is called the "i-wave" herein.

The i-wave is then searched for valleys, which are classified into deep valleys and shallow valleys based on the area of the located valleys (step S404). This valley pattern conversion step is described next below.

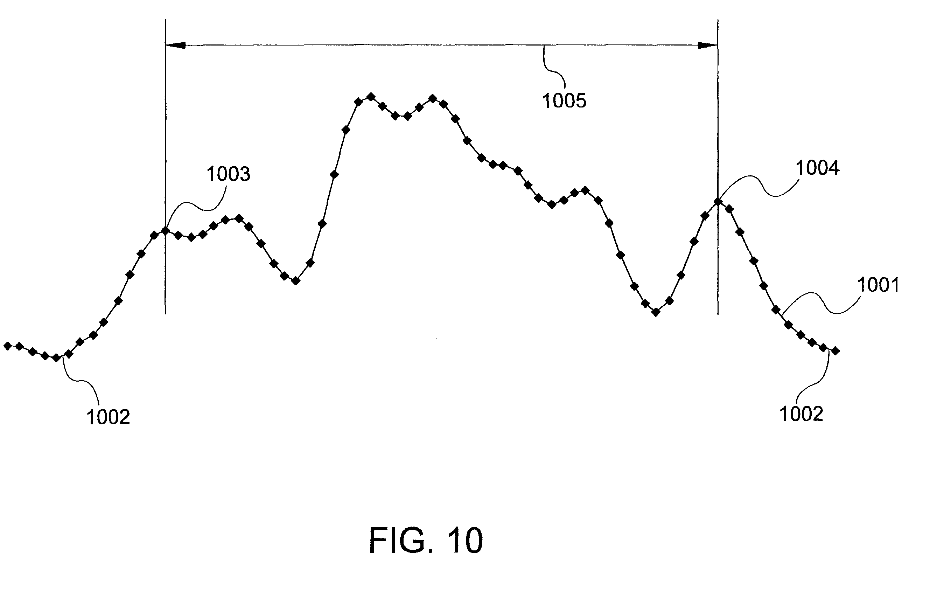

The first task is to determine the part of the i-wave to be searched for valleys. Fig. 10 shows a valley searching range. As shown in Fig. 10, there is a dip 1002 at both ends of the i-wave 1001. To avoid erroneously recognizing these dips 1002 as valleys, the left-end peak 1003 as the peak nearest to the left end of the i-wave, and the right-end peak 1004 as the peak nearest to the right end of the I-wave are found, and the range between these two peaks 1003 and 1004 is defined as the valley search range 1005.

This left-end peak 1003 and right-end peak 1004 can be detected by scanning the i-wave 1001 sequentially from the left end to the right and by finding a value that is m1 % or greater of the maximum peak, is preceded by m2 or more monotonically increasing values, and is followed by a smaller value. Note that m1 and m2 are arbitrary integer values, which are m1 = 10 and m2 = 2 in this embodiment.

Valleys are then found in the valley search range 1005 of the i-wave, and the area of each detected valley is calculated. The following two conditions are used to detect a valley.

First, the surface defined by a concave waveform portion of the i-wave formed by a set of (1 + k1 + k2) or more consecutive points including k1 or more consecutive monotonically decreasing points on the left side of a selected point and k2 or more consecutive monotonically increasing points on the right side of the selected point, and a line connecting both ends of this concave waveform portion, is a valley. Second, the surface defined by a concave waveform portion of the i-wave formed by a set of (1 + k1 + k2) or more consecutive points including k2 or more consecutive monotonically decreasing points on the left side of a selected point and k1 or more consecutive monotonically increasing points on the right side of the selected point, and a line connecting both ends of this concave waveform portion, is also a valley. Values k1 and k2 are arbitrary integer values and are $k_1 = 4$ and $k_2 = 3$ in this embodiment. The selected point is a minimum, and the end points of the concave waveform portion are maximums.

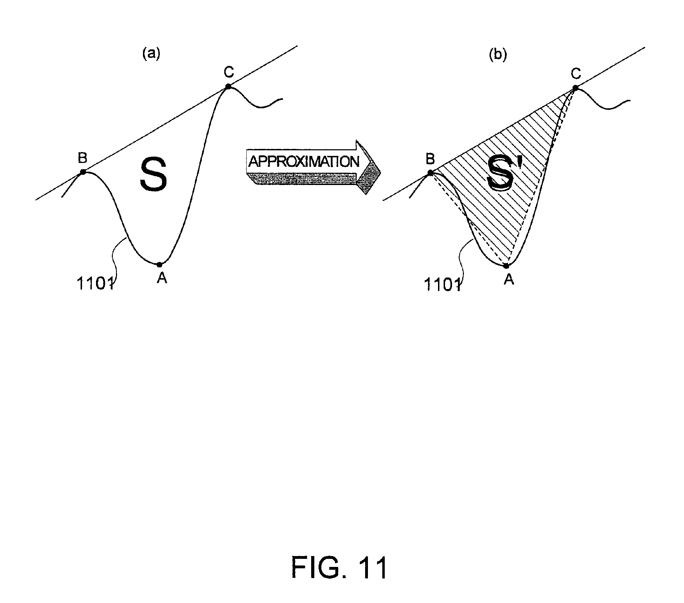

Calculating the precise area of a valley is time-consuming and greatly increases the load on the processor. The valley area is therefore approximated. Fig. 11 illustrates a valley area calculation method. Fig. 11 (a) shows a valley of area S, and Fig. 11 (b) shows the approximated area S'. As shown in Fig. 11 (a), the area S of the valley is the area of the surface defined by the concave waveform portion BAC formed by the minimum A and the two maximums B, C on either side of A, and the line BC joining the maximums B, C. As shown in Fig. 11 (b), the approximated area S' is that of the triangle ABC.

The value E of an evaluation function E = f(H,S) with the calculated valley area S (as mentioned above, S' is in fact used) and the height H to the valley bottom as variables is then calculated. Based on the returned value, the respective valley is classified to be either a deep valley or a shallow valley.

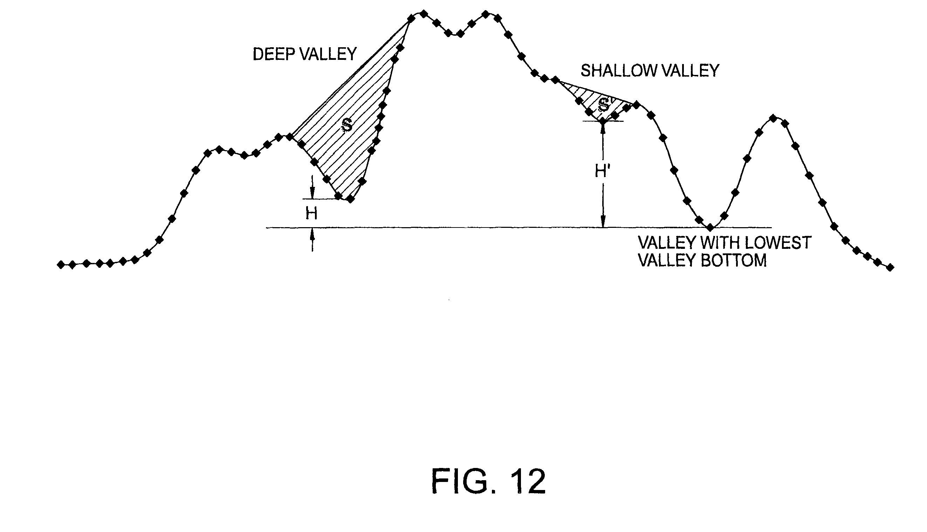

The evaluation function f(H,S) is defined as shown in the following equation where H is the valley bottom height (measured relative to the lowest-reaching ones of the minimums as illustrated in Fig. 12), S is the valley area, aH is a weighting coefficient for H, and $a_S$ is a weighting coefficient for S and is a negative value; * is the multiplication operator:

$$E = f(H,S) = aH * H + a_S * S$$

When the value E of this valley evaluation function is less than or equal to a threshold value Emax, the valley is considered a deep valley; when E is greater than Emax, the valley is considered a shallow valley.

As shown in Fig. 12, the valley area of a deep valley is great and the valley bottom height is small. This means that the value of the valley evaluation function for a deep valley pattern is small (remember $a_S$ is negative). Valleys are therefore classified into one of two groups, deep valleys and shallow valleys, based on whether E Emax or E > Emax, respectively.

Whether the number of deep valleys is from 1 to 3 is then determined (step S405). If it is (step S405 returns yes), the procedure advances to step S406. If the number of deep valleys is 0 or greater than 3 (step S405 returns no), an error handling process is run (step S407) because character recognition is not possible, and the character recognition process ends.

After the error handling process in step S407, the procedure could advance to step S408 to apply the character recognition process to the next character instead of terminating the character recognition process.

In step S406, the locations of the deep valleys are determined next, and the effective range of the i-wave is calculated based on the evaluation conditions in memory area 313. Based on the detected valley locations and the effective range of the i-wave, the relative positions of the deep valleys within the effective range of the i-wave are determined. Then, based on the relative positions of these valleys and the evaluation conditions in memory area 313, the magnetic pattern identification process for recognizing the CMC7 character is run (step S406). This magnetic pattern identification process is described in further detail below.

After character recognition, step S408 determines whether all characters on the check have been recognized and thus determines whether to repeat steps S401 to S407. If the character recognition process has been run for all characters on the check (step S408 returns yes), the character recognition process ends. If characters remain to be recognized (step S408 returns no), the procedure loops back to step S401 to recognize the next character.

The error handling process in step S407 could automatically reverse the check in the paper path 202 so as cause the magnetic head 204 to scan the MICR code again. Alternatively, the error handling process could alert the operator which character was not recognized and prompt the operator for manual input. Further alternatively, the check could be simply ejected from the printer 100 because character recognition is not possible.

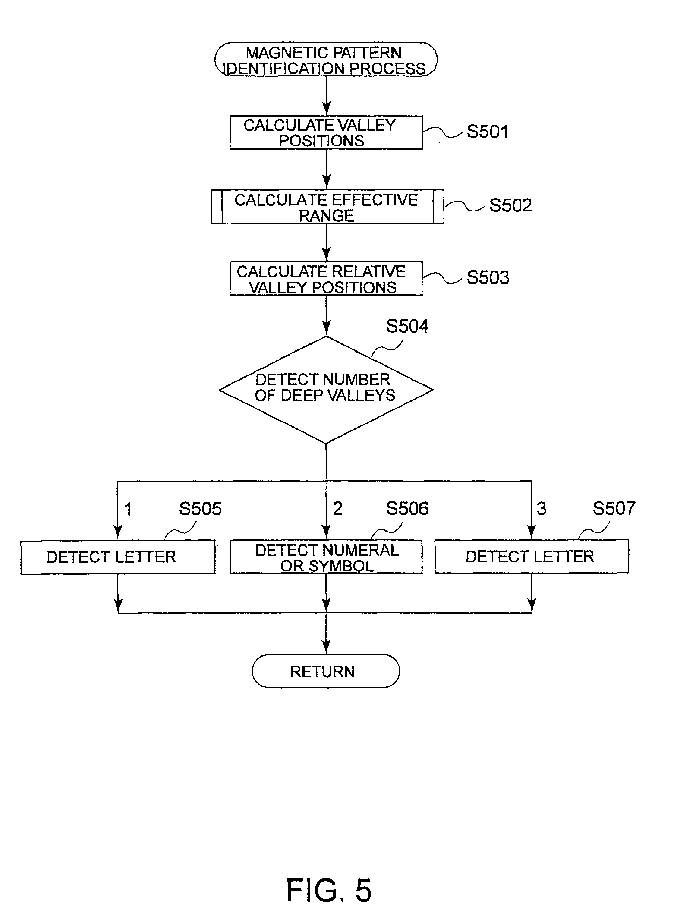

The magnetic pattern identification process is described next below with reference to Fig. 5, showing a flow chart of this process.

The location within the i-wave of a deep valley is first detected (step S501). As has been explained before, in this embodiment the i-wave is represented by digital sample values. Unless a very high sample rate is used in A/D converter 209, the intervals between successive sample values (points on the i-wave) are relatively long, so that the positions of minimums in the i-wave can be obtained only roughly. A "true minimum" is therefore calculated in each case on the assumption that the three points including a respective rough minimum and one point on each side thereof are located on a quadratic curve. The minimum of the quadratic curve is taken as the true minimum and its x coordinate value is used as the "valley position". The y coordinate value of this true minimum is used as the "valley depth". The smaller the y coordinate value, the deeper the valley.

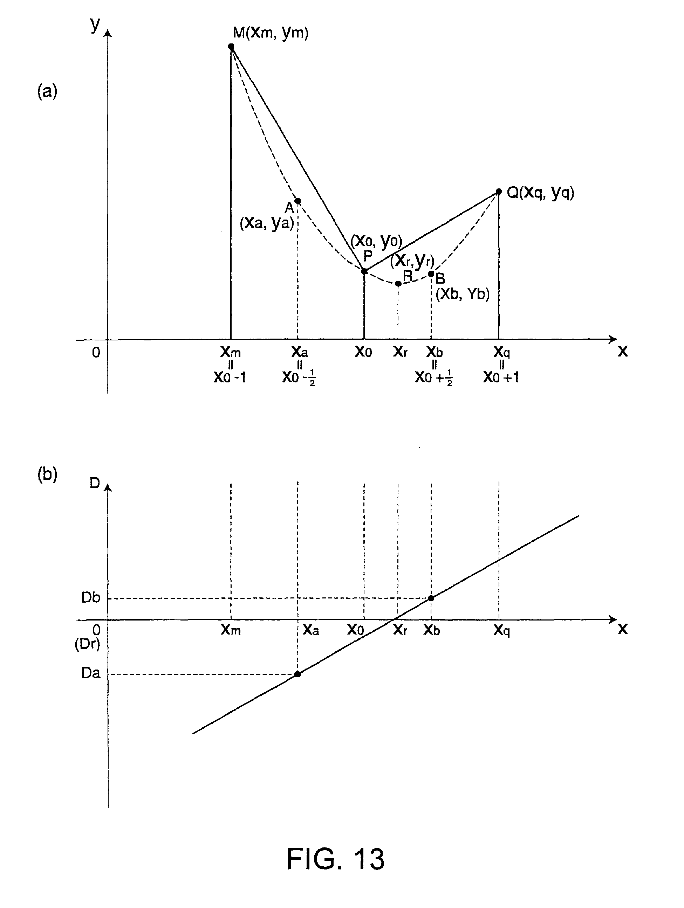

Fig. 13 shows a method for calculating the true minimum assuming the waveform is a quadratic curve. Fig. 13 (a) shows the true minimum, and Fig. 13 (b) shows the slope of the curve. If point P is a (rough) minimum and points M and Q are points on either side of point P, point R is the true minimum. The coordinates of points P, M, Q, and R are, respectively, $(x_0, y_0)$, $(x_m, y_m)$ $(x_q, y_q)$, and $(x_r, y_r)$. Point A is the midpoint between x-coordinates $x_0$ and $x_m$ on the quadratic curve, and point B is the midpoint between $x_0$ and $x_q$. The coordinates of points A and B are $(x_a, y_a)$ and $(x_b, y_b)$. The slope at points R, A, and B are Dr, Da, Db, respectively. Further, $x_m = x_0-1$, $x_q = x_0+1$, $x_a = x_0-1/2$, $x_b = x_0+1/2$, and Dr = 0 because point R is a minimum.

As shown in Fig. 13 (b), the slope of the quadratic curve is represented by a straight line. The following ratio is therefore established:

$$(Dr-Da):(Db-Dr) = (x_r-x_a):(x_b-x_r)$$

Valley position $x_r$ can therefore be obtained from the following equation.

$$x_r = x_0-(Db+Da)/\{(Db-Da)*2\}$$

Slope Da at point A and slope Db at point B are defined as:

$$Da = (y_0-y_m)/(x_0-x_m) = y_0-y_m$$

$$Db = (y_q\text{-}y_0)/(x_q\text{-}x_0) = y_q\text{-}y_0$$

The process for determining the effective range of the i-wave is performed next (step S502) and is described in further detail below.

Next, based on the effective range of the i-wave and the location of the deep valleys, the relative positions of these deep valleys within the effective range of the i-wave are determined (step S503).

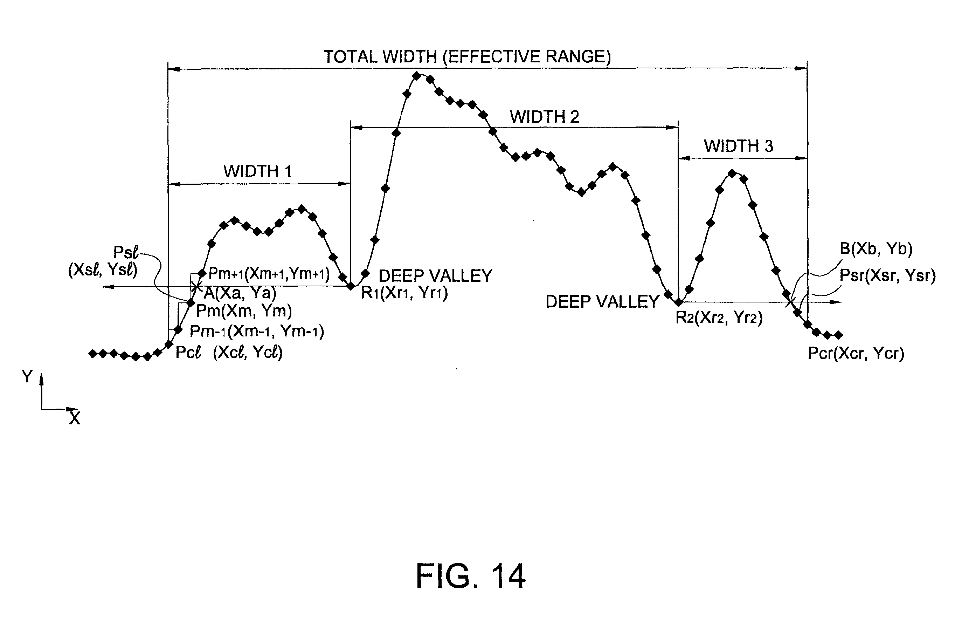

Fig. 14 illustrates a method for calculating the relative positions of deep valleys in an i-wave having two deep valleys. As shown in Fig. 14, the effective range of the i-wave is the range from point Pcl to point Pcr. The positions of the two deep valleys divide this range into three sections whose widths are width 1, width 2, and width 3. The effective range (or total width) of the i-wave (extension in the x-axis direction) is, thus, the sum of widths 1, 2, and 3. The relative positions r1 and r2 of the two deep valleys are expressed as the ratio of width 1 and width 2, respectively, to the total width as shown in the following equations.

$$r1 = width\ 1/(width\ 1 + width\ 2 + width\ 3)$$

$$r2 = width\ 2/(width\ 1 + width\ 2 + width\ 3)$$

Similarly to when there are two deep valleys, the relative valley position when there is only one deep valley can be expressed by the equation:

$$r1 = width\ 1/(width\ 1 + width\ 2).$$

Yet further, when there are three deep valleys, the relative valley positions can be expressed as:

$$r1 = width\ 1/(width\ 1 + width\ 2 + width\ 3 + width\ 4)$$

$$r2 = width\ 2/(width\ 1 + width\ 2 + width\ 3 + width\ 4)$$

$$r3 = width\ 3/(width\ 1 + width\ 2 + width\ 3 + width\ 4).$$

The number of deep valleys in the i-wave is determined next (step S504).

If there are two deep valleys (step S504 returns 2), the CMC7 character is either a numeral or a symbol so the procedure advances to step S506. Based on the relative positions r1 and r2 of the two deep valleys and standard values of these relative positions for the fifteen CMC7 characters which standard values are stored in memory area 313, or based on threshold values that define two-dimensional regions (2D regions) in the r1-r2 plane, the CMC7 character is recognized and the numeral or symbol is determined (step S506).

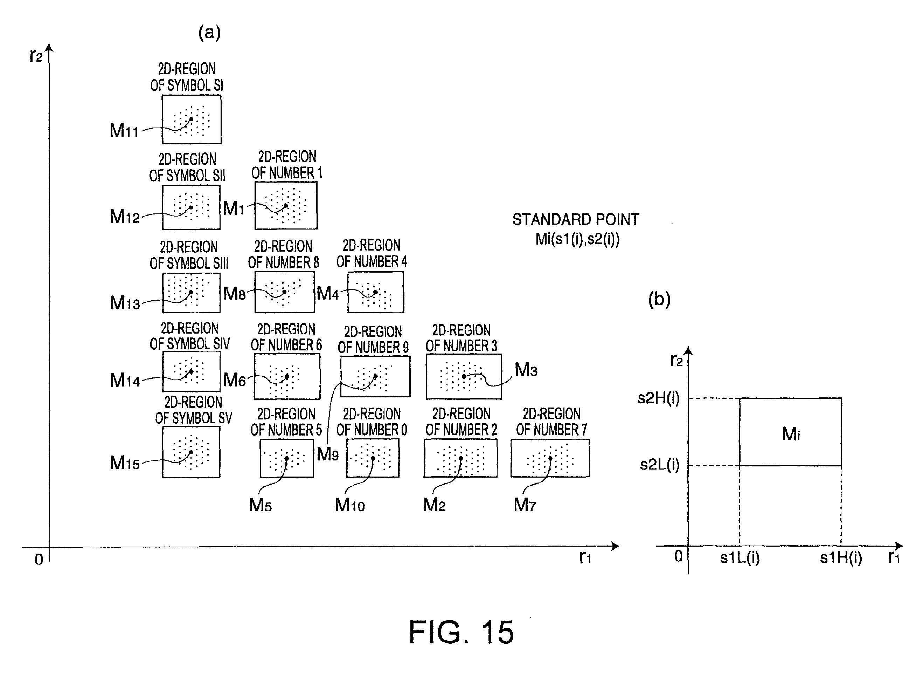

This is shown in Fig. 15 illustrating the process for the case of two deep valleys. Fig. 15 (a) shows the r1-r2 plane distributed over which are 15 non-overlapping two-dimensional regions. Fig. 15 (b) shows an arbitrary one of these regions enlarged. There are fifteen CMC7 characters, 10 numerals and 5 symbols, that have two deep valleys, and there is a one-to-one relation between these 15 characters and the 15 regions shown in Fig. 15 (a). To recognize a character, the values of r1 and r2 finally obtained from the i-wave for a certain character must define a point located in one of these 15 regions. The coordinates (s1(i), s2(i)) of standard points $M_i$ (i = 1 to 15) (i.e., the above mentioned standard values) and the threshold values s1L(i), s1H(i), s2L(i), s2H(i) that define each region i are known. s1H(i) is the maximum threshold value of the region i in direction r1 and s1L(i) is the minimum threshold value in that direction. s2H(i) is the maximum threshold value of the region i in direction r2 and s2L(i) is the minimum threshold value in that direction.

When the point defined by values r1, r2 derived from the i-wave falls within any of those 15 regions, the corresponding CMC7 character is recognized. That is, an i-wave for which the conditions described below are met for any of the 15 regions i, represents a recognizable character. Character recognition is not possible if the following conditions are met for none of the 15 regions:

$$s1L(i) < r1 < s1H(i) \text{ and } s2L(i) < r2 < s2H(i)$$

Alternatively (or additionally, to increase the recognition rate), the difference Error(i) between the point X defined by coordinates r1, r2 as derived from the i-wave and the standard point $M_i$ of each of the fifteen CMC7 characters is determined, and the CMC7 character for which the difference is the smallest is recognized as the printed character.
Error(i) is defined as:

$$\text{Error}(i) = |(r1 - s1(i))| + |(r2 - s2(i))|.$$

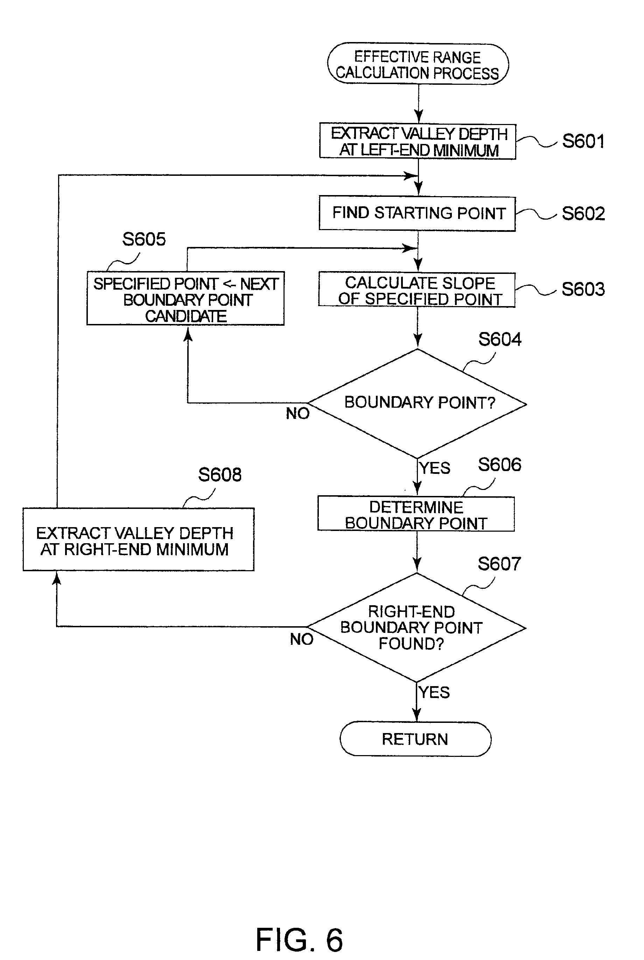

Note that character recognition is not possible when the minimum Error(i) is greater than a predetermined threshold value.
If the number of deep valleys is 1 (step S504 returns 1), the CMC7 character is recognized and the letter determined (step S505), in a way analogous to the process described above for the two deep valleys, namely based on the relative position r1 of the deep valley and either the standard value for r1 of six CMC7 letters stored in memory area 313, or the threshold values of respective one-dimensional regions. That is, while a numeral or symbol written as a CMC7 character is recognized and determined when there are two deep valleys based on the differences between the point X(r1,r2) derived form the i-wave on the one hand and those standard points $M_i$ on the other hand in a two-dimensional coordinate system, a letter written as a CMC7 character is recognized and determined from the difference between the corresponding point X and corresponding standard points $M_i$ or threshold values in a one-dimensional coordinate system.
If the number of deep valleys is 3 (step S504 returns 3), the CMC7 character is recognized and the letter determined (step S507) in an analogous way using a three-dimensional coordinate system, in which point X defined by the relative positions r1, r2, r3 of the deep valleys is compared with the standard points $M_i$, each defined by three standard values, of twenty CMC7 letters or it is checked whether point X falls into any the three-dimensional regions each defined by three pairs of threshold values in that three-dimensional coordinate system. The standard values and/ or the threshold values are stored in memory area 313.
A process for calculating the effective range of the i-wave in the method described above is described next. Fig. 6 is a flow chart of this process which is part of the magnetic pattern identification process.
First, the valley depth (Yr1 in Fig. 14) of the left-end minimum (the deep valley on the left end) is detected (step S601).
The starting point for searching a boundary point of the effective range is then located (step S602). Fig. 14 shows a method for calculating the effective range for the case of two deep valleys. As shown in Fig. 14 the two minimums of the deep valleys are R1 and R2. The points where horizontal lines extending in mutually opposite directions from these two minimums R1 and R2 intersect the i-wave are points A and B. Note that the horizontal lines are lines parallel to the line connecting the two end points of the i-wave. The point nearest to point A having a Y coordinate equal to or smaller than that of point A is point Psl and is the starting point for finding the left-end boundary point effective range; the point nearest to point B having a Y coordinate equal to or smaller than that of point B is point Psr and is the starting point for finding the right-end boundary point of the effective range.
Point A is defined as A(Xa,Ya), B as B(Xb,Yb), R1 as R1(Xr1,Yr1), R2 as R2(Xr2,Yr2), selected point Pm of the integrated wave as $P_m(X_m, Y_m)$, right-end boundary point Pcr of the effective range as Pcr(Xcr,Ycr), left-end boundary point Pcl of the effective range as Pcl(Xcl,Ycl), right-end starting point Psr as Psr(Xsr,Ysr), and left-end starting point Psl as Psl(Xsl,Ysl). m is an integer and as m increases point Pm moves farther to the right end of the i-wave.
The right-end starting point Psr and left-end starting point Psl satisfy the following equations.

$$Xsl = [Xa], Ysl < = Ya = Yr1$$

$$Xsr = [Xb] + 1, Ysr < = Yb = Yr2$$

Note that the square brackets indicate an operation extracting the integer part of the number inside the brackets.
The slope at a specified point (point P) is calculated next (step S603). The slope D(X) of any point P(X,Y) = Pm(Xm,Ym) is determined, using the following equations, from the coordinates of that point and its neighboring points Pm-1 and Pm + 1 on the assumption that all three points are on a straight line.

(i) if $X = X_m < X_{m+1}$ and $Y = Y_m < Y_{m+1}$,

then $D(X) = D(X_m) = (Y_{m+1}-Y_m) / (X_{m+1}-X_m) = Y_{m+1}-Y_m$

(ii) if $X = X_m > X_{m-1}$ and $Y = Ym < Y_{m-1}$,
then $D(X) = D(X_m) = (Y_m-Y_{m-1}) / (X_m-X_{m-1}) = Y_m-Y_{m-1}$

Whether the specified point is a boundary point of the effective range is determined next (step S604). The specified point is such a boundary point when the absolute value of the slope is less than or equal to a specified value Dc. That is,

$$|D(X)| <= Dc$$

where Dc differs depending on the type of magnetic material used in the magnetic head, and is stored in the memory area 313.

If $|D(X)| < = Dc$ is not true (step S604 returns no), the next boundary point candidate is made the specified point P (step S605), the procedure loops back to step S604, and it is determined whether that point is a boundary point.

More specifically, the X coordinate of the next boundary point candidate defined as the specified point P is

$$X = X-1 = X_{m-1}$$

when $D(X) > 0$ (that is, searching for the left end boundary point) and

$$X = X+1 = X_{m+1}$$

when $D(X) < 0$ (that is, searching for the right end boundary point).

If $|D(X)| < = Dc$ is true (step S604 returns yes), the specified point is the boundary point (step S606).

More specifically, X is the coordinate for the left end boundary point, i.e., Xcl = X if $D(x) > 0$, whereas X is the coordinate for the right end boundary point, i.e., Xcr = X if $D(x) < 0$.

Whether the right-end boundary point of the effective range was found is determined next (step S607). If not (step S607 returns no), the valley depth (Yr2 in Fig. 14) of the right-end minimum (the deep valley at the right end) is extracted (step S608), the procedure loops back to step S602, and the starting point for finding the boundary point of the effective range is found.

However, if the right boundary point of the effective range is determined (step S607 returns yes), the effective range calculation process ends. More specifically, the effective range of the i-wave is from point Pcl to point Pcr.

The benefits of the present invention are described below.

By calculating the effective range of the i-wave for a respective character based on the slope of the i-wave, the effective range of the i-wave can be determined irrespective of differences in the depth of valleys in the i-wave resulting from differences in the type of magnetic material used in the magnetic head. Therefore, characters can be accurately recognized by calculating the relative positions of valleys within the calculated effective range of the i-wave.

Furthermore, because character recognition is possible irrespective of the type of magnetic material used in the magnetic head, a magnetic head using low-cost magnetic materials can be used and a low-cost magnetic pattern reader can be provided.

Yet further, the magnetic pattern recognition method of the invention can be combined with a prior art magnetic pattern recognition method based on a detected differential waveform, thereby enabling even more accurate character recognition.

One embodiment of the invention has been described above by way of example only and shall not be construed as limiting the scope of the invention. Various other embodiments achieved by changing or modifying some or all of the described elements will be apparent to one with ordinary skill in the art, and all such embodiments are included within the scope of the present invention as defined by the appended claims.

**Claims**

**1.** A magnetic pattern recognition method comprising:

(a) obtaining a voltage waveform corresponding to a magnetic pattern formed by a sequence of spaced magnetized bars said magnetic pattern representing a character;
(b) integrating the voltage waveform to obtain an integrated wave (1001); and
(c) recognizing said character based on the position of one or more concave waveform portions in said integrated wave, each concave waveform portion including two maximums (B, C) of the integrated wave (1001) and a minimum (A) between the two maximums (B, C) and reflecting a space or spaces between two or more adjacent ones of said magnetized bars;

wherein step (c) comprises:

(c1) calculating for each of said one or more concave waveform portions the area of a valley formed by the respective concave waveform portion between said two maximums (B, C) on the one hand, and the line connecting the two maximums (B, C) on the other hand,
(c2) classifying each of said one or more valleys as being either a deep valley or a shallow valley based on the respective area (S, S') calculated in step (c1), the area of a deep valley being greater than that of a shallow valley;
(c3) calculating the position (R1, R2) of the one or more deep valleys identified in step (c2);
(c4) calculating an effective range of the integrated wave (1001) including:

(c4-1) determination of starting points (Xa, Ya, Xb, Yb) for finding the boundary points of the effective range of the integrated wave (1001) by calculating an end point at both ends of the integrated wave (1001), wherein, when the integrated wave (1001) is viewed in a Cartesian X-Y-coordinate system in which the depths of said valleys are measured along the Y axis, the end points are defined as points having an Y coordinate value equal to that of the minimum (A) of a respective deep valley at each end; and
(c4-2) finding of the boundary points (Pcl, Pcr) of the effective range of the integrated wave (1001) by searching toward the respective end of the integrated wave (1001) from each starting point determined in step (c4-1), said boundary point (Pcl, Pcr) of the effective range of the integrated wave (1001) at each end being a point that meets the following conditions:

(i) the boundary point (Pcl, Pcr) is the starting point at the respective end calculated in step (c4-1) or is at a position toward the end of the integrated wave (1001) from the starting point,
(ii) the Y coordinate of the boundary point (Pcl, Pcr) is less than or equal to that of the starting point determined at the respective end, and
(iii) the absolute value of the slope of the integrated wave (1001) at the boundary point (Pcl, Pcr) is less than or equal to a specified value;

(c5) calculating relative positions of said one or more deep valleys within said effective range; and
(c6) recognizing the character represented by said magnetic pattern from the one or more relative position obtained in step (c5).

**2.** The method of claim 1, wherein step (c6) comprises identifying the character according to the number of said deep valleys.

**3.** The method of claim 1 or 2, wherein step (c5) comprises, supposing there are n deep valleys, n being an integer equal to or greater than 1,

(c5-1) identifying the n+1 partial ranges into which the n positions of the n deep valleys subdivide said effective range, and
(c5-2) calculating, as said relative positions, for each of the first n partial ranges the respective ratio of that partial range to the whole effective range.

**4.** The method of any one of the preceding claims, wherein step (a) comprises

(a1) obtaining a voltage waveform that represents a sequence of said magnetic patterns each pattern representing a respective character; and
(a2) extracting, from the voltage waveform obtained in step (a1) a partial waveform corresponding to the magnetic pattern for one character,

wherein step (b) is are applied to said partial waveform.

5. The method of any one of claims 1 to 4, wherein step (c) further comprises selecting one of evaluation conditions for recognizing the magnetic pattern according to the type of a magnetic head used to obtain said voltage waveform in step (a).

6. The method of any one of claims 1 to 5, wherein the magnetic pattern is that of a magnetic ink character of the CMC7 font.

7. A computer-readable data storage medium carrying computer program means capable of implementing the method as described in any of claims 1 to 6.

8. The computer-readable data storage medium of claim 7, comprising a compact disc, a floppy disc, a hard disc, a magneto-optical disc, a digital video/versatile disc, a semiconductor memory, or a magnetic tape.

9. An apparatus for recognizing a magnetic pattern formed by a sequence of spaced magnetized bars and representing a character, comprising:

> first means (203, 204, 206) for obtaining a voltage waveform corresponding to the magnetic pattern;
> second means (306) for integrating the voltage waveform to obtain an integrated wave (1001);
> third means (307, 308) for recognizing said character based on the position of one or more concave waveform portions in said integrated wave, each concave waveform portion including two maximums (B, C) of the integrated wave (1001) and a minimum (A) between the two maximums (B, C) and reflecting a space or spaces between two or more adjacent ones of said magnetized bars;
> said third means comprising:

>> first means for calculating for each of said one or more concave waveform portions the area of a valley formed by the respective concave waveform portion between said two maximums (B, C) on the one hand, and the line connecting the two maximums (B, C) on the other hand,
>> second means for classifying each of said one or more valleys as being either a deep valley or a shallow valley based on the respective area (S, S') calculated by said first means, the area of a deep valley being greater than that of a shallow valley;
>> third means for calculating the position (R1, R2) of the one or more deep valleys identified by said second means;
>> fourth means for calculating an effective range of the integrated wave (1001) including:

>>> means for determining the starting points (Xa, Ya, Xb, Yb) for finding the boundary points of the effective range of the integrated wave (1001) by calculating an end point at both ends of the integrated wave (1001), wherein, when the integrated wave (1001) is viewed in a Cartesian X-Y-coordinate system in which the depths of said valleys are measured along the Y axis, the end points are defined as points having an Y coordinate value equal to that of the minimum (A) of a respective deep valley at each end; and
>>> means for finding of the boundary points (Pcl, Pcr) of the effective range of the integrated wave (1001) by searching toward the respective end of the integrated wave (1001) from each starting point determined by said determining means, said boundary point (Pcl, Pcr) of the effective range of the integrated wave (1001) at each end being a point that meets the following conditions:

>>>> (i) the boundary point (Pcl, Pcr) is the starting point at the respective end determined by said determining means or is at a position toward the end of the integrated wave (1001) from the starting point,
>>>> (ii) the Y coordinate of the boundary point (Pcl, Pcr) is less than or equal to that of the starting point determined at the respective end, and
>>>> (iii) the absolute value of the slope of the integrated wave (1001) at the boundary point (Pcl, Pcr) is less than or equal to a specified value;

>> fifth means for calculating relative positions of said one or more deep valleys within said effective range; and
>> sixth means for recognizing the character represented by said magnetic pattern from the one or more relative position calculated by said fifth means.

10. The apparatus of claim 9, wherein said sixth means is adapted to identify the character according to the number of said deep valleys.

11. The apparatus of claim 9 or 10, wherein said fifth means comprises, supposing there are n deep valleys, n being an integer equal to or greater than 1,

   means for identifying the n+1 partial ranges into which the n positions of the n deep valleys subdivide said effective range, and
   means for calculating, as said relative positions, for each of the first n partial ranges the respective ratio of that partial range to the whole effective range.

12. The apparatus of claim 9, 10 or 11, wherein said first means (203, 204, 206) comprises:

   detecting means for obtaining a voltage waveform that represents a sequence of said magnetic patterns each pattern representing a respective character; and
   extraction means for extracting, from said voltage waveform a partial waveform corresponding to the magnetic pattern for one character.

13. The apparatus of any one of claims 9 to 12, wherein said third means (307, 308) further comprises means for selecting one of evaluation conditions for recognizing the magnetic pattern according to the type of a magnetic head used as said first means.

14. The apparatus of any one of claims 9 to 13, further comprising:

   a paper feed mechanism (205, 214, 215); and
   a printing means (103, 217) for printing on a print medium (106) transported by the paper feed mechanism;

   wherein said first means (203, 204, 206) comprises detection means adapted to detect a magnetic pattern on the print medium transported by the paper feed mechanism.

15. Use of the apparatus of any one of claims 9 to 14 for recognizing a magnetic pattern composed of magnetic ink characters of the CMC7 font.

FIG. 1

FIG. 2

EP 1 199 674 A2

FIG. 3

17

```
        ┌─────────────────────┐
        │   RECOGNITION       │
        │     PROCESS         │
        └─────────────────────┘
                  │
                  ▼
        ┌─────────────────────┐
        │  DETECT START OF    │ ～ S401
        │     CHARACTER       │
        └─────────────────────┘
                  │
                  ▼
        ┌─────────────────────┐
        │   EXTRACT ONE       │ ～ S402
        │     CHARACTER       │
        └─────────────────────┘
                  │
                  ▼
        ┌─────────────────────┐
        │    GENERATE         │ ～ S403
        │  INTEGRATED WAVE    │
        └─────────────────────┘
                  │
                  ▼
        ┌─────────────────────┐
        │  CLASSIFY VALLEYS   │ ～ S404
        └─────────────────────┘
                  │
                  ▼         S405
              ╱───────╲
             ╱ NUMBER  ╲
            ╱ OF DEEP   ╲  NO
            ╲ VALLEYS = ╱─────────────┐
             ╲ 1 TO 3? ╱              │
              ╲───────╱               │
                  │ YES   S406        │  S407
                  ▼                   ▼
        ┌─────────────────────┐  ┌─────────────────────┐
        │  MAGNETIC PATTERN   │  │  ERROR HANDLING     │
        │ IDENTIFICATION      │  │     PROCESS         │
        │     PROCESS         │  └─────────────────────┘
        └─────────────────────┘         │
                  │       S408          │
                  ▼                      │
              ╱───────╲                  │
         NO  ╱   ALL    ╲                 │
        ◄───╱ CHARACTERS ╲                │
            ╲ IDENTIFIED? ╱               │
              ╲───────╱                   │
                  │ YES                   │
                  ▼◄──────────────────────┘
        ┌─────────────────────┐
        │        END          │
        └─────────────────────┘
```

# FIG. 4

```
        ┌─────────────────────────┐
        │   MAGNETIC PATTERN      │
        │ IDENTIFICATION PROCESS  │
        └─────────────────────────┘
                    │
                    ▼
        ┌─────────────────────────┐
        │   CALCULATE VALLEY      │────  S501
        │      POSITIONS          │
        └─────────────────────────┘
                    │
                    ▼
        ┌─────────────────────────┐
        │   CALCULATE EFFECTIVE   │────  S502
        │        RANGE            │
        └─────────────────────────┘
                    │
                    ▼
        ┌─────────────────────────┐
        │   CALCULATE RELATIVE    │────  S503
        │   VALLEY POSITIONS      │
        └─────────────────────────┘
                    │
                    ▼         S504
                   ╱╲
                  ╱  ╲
                 ╱    ╲
           ╱  DETECT NUMBER  ╲
           ╲ OF DEEP VALLEYS ╱
                 ╲    ╱
                  ╲  ╱
                   ╲╱
                    │
     ┌──────────────┼──────────────┐
     │1   S505      │2   S506      │3   S507
     ▼              ▼              ▼
┌──────────────┐ ┌──────────────┐ ┌──────────────┐
│ DETECT LETTER│ │DETECT NUMERAL│ │ DETECT LETTER│
│              │ │  OR SYMBOL   │ │              │
└──────────────┘ └──────────────┘ └──────────────┘
     │              │              │
     └──────────────┼──────────────┘
                    │
                    ▼
              ┌───────────┐
              │  RETURN   │
              └───────────┘
```

# FIG. 5

EFFECTIVE RANGE
CALCULATION PROCESS

EXTRACT VALLEY DEPTH
AT LEFT-END MINIMUM — S601

FIND STARTING POINT — S602

S605

SPECIFIED POINT ← NEXT
BOUNDARY POINT
CANDIDATE

CALCULATE SLOPE
OF SPECIFIED POINT — S603

S604

BOUNDARY POINT?

NO

YES    S606

DETERMINE
BOUNDARY POINT

S608

EXTRACT VALLEY DEPTH
AT RIGHT-END MINIMUM

S607

RIGHT-END
BOUNDARY POINT
FOUND?

NO

YES

RETURN

FIG. 6

20

FIG. 7

FIG. 8

EP 1 199 674 A2

FIG. 9

FIG. 10

(a)

C

B

S

1101

A

APPROXIMATION

(b)

C

B

S'

1101

A

FIG. 11

FIG. 12

DEEP VALLEY

SHALLOW VALLEY

S

S'

H

H'

VALLEY WITH LOWEST
VALLEY BOTTOM

(a)

(b)

FIG. 13

FIG. 14

EP 1 199 674 A2

(a)

$r_2$

2D-REGION
OF SYMBOL SI

$M_{11}$

2D-REGION
OF SYMBOL SII

2D-REGION
OF NUMBER 1

$M_{12}$ $M_1$

STANDARD POINT
$M_i(s1(i),s2(i))$

2D-REGION
OF SYMBOL SIII

2D-REGION
OF NUMBER 8

2D-REGION
OF NUMBER 4

(b)

$M_{13}$ $M_8$ $M_4$

2D-REGION
OF SYMBOL SIV

2D-REGION
OF NUMBER 6

2D-REGION
OF NUMBER 9

2D-REGION
OF NUMBER 3

$r_2$

$M_{14}$ $M_6$ $M_3$

2D-REGION
OF SYMBOL SV

2D-REGION
OF NUMBER 5

2D-REGION
OF NUMBER 0

2D-REGION
OF NUMBER 2

2D-REGION
OF NUMBER 7

$s2H(i)$

$M_i$

$M_{15}$ $M_9$

$s2L(i)$

$M_5$ $M_{10}$ $M_2$ $M_7$

0 $r_1$

0 $s1L(i)$ $s1H(i)$ $r_1$

# FIG. 15

(SAMPLE NUMERAL)

0.15

0.15

0.35

0.8 0.7

3.2 [mm]

0.6

1.9

0.7

<u>6</u>

(SAMPLE SYMBOL)

1.175

3.2 [mm]

2.2

1.5

1.0

<u>SV</u>

FIG. 16

| CHARACTER \ BAR INTERVAL | a | b | c | d | e | f |
|---|---|---|---|---|---|---|
| 1 | 1 | 0 | 0 | 0 | 1 | 0 |
| 2 | 0 | 1 | 1 | 0 | 0 | 0 |
| 3 | 1 | 0 | 1 | 0 | 0 | 0 |
| 4 | 1 | 0 | 0 | 1 | 0 | 0 |
| 5 | 0 | 0 | 0 | 1 | 1 | 0 |
| 6 | 0 | 0 | 1 | 0 | 1 | 0 |
| 7 | 1 | 1 | 0 | 0 | 0 | 0 |
| 8 | 0 | 1 | 0 | 0 | 1 | 0 |
| 9 | 0 | 1 | 0 | 1 | 0 | 0 |
| 0 | 0 | 0 | 1 | 1 | 0 | 0 |
| SI | 1 | 0 | 0 | 0 | 0 | 1 |
| SII | 0 | 1 | 0 | 0 | 0 | 1 |
| SIII | 0 | 0 | 1 | 0 | 0 | 1 |
| SIV | 0 | 0 | 0 | 1 | 0 | 1 |
| SV | 0 | 0 | 0 | 0 | 1 | 1 |

| CHARACTER \ BAR INTERVAL | a | b | c | d | e | f |
|---|---|---|---|---|---|---|
| A | 0 | 1 | 0 | 0 | 0 | 0 |
| B | 1 | 0 | 1 | 0 | 1 | 0 |
| C | 0 | 0 | 0 | 1 | 1 | 1 |
| D | 1 | 0 | 0 | 1 | 1 | 0 |
| E | 0 | 0 | 0 | 1 | 0 | 0 |
| F | 0 | 0 | 1 | 0 | 1 | 1 |
| G | 1 | 0 | 0 | 0 | 1 | 1 |
| H | 1 | 0 | 1 | 1 | 0 | 0 |
| I | 0 | 0 | 0 | 0 | 0 | 1 |
| J | 1 | 0 | 0 | 1 | 0 | 0 | 1 |
| K | 0 | 1 | 1 | 0 | 1 | 0 |
| L | 0 | 1 | 0 | 0 | 1 | 1 |
| M | 0 | 0 | 1 | 1 | 1 | 0 |

| CHARACTER \ BAR INTERVAL | a | b | c | d | e | f |
|---|---|---|---|---|---|---|
| N | 0 | 0 | 1 | 0 | 0 | 0 |
| O | 1 | 0 | 0 | 0 | 0 | 0 |
| P | 0 | 1 | 0 | 1 | 1 | 0 |
| Q | 1 | 1 | 1 | 0 | 0 | 0 |
| R | 0 | 1 | 1 | 1 | 0 | 0 |
| S | 0 | 1 | 0 | 1 | 0 | 1 |
| T | 0 | 0 | 0 | 0 | 1 | 0 |
| U | 1 | 1 | 0 | 1 | 0 | 0 |
| V | 1 | 1 | 0 | 0 | 0 | 1 |
| W | 1 | 0 | 0 | 1 | 0 | 1 |
| X | 1 | 1 | 0 | 0 | 1 | 0 |
| Y | 0 | 1 | 1 | 0 | 0 | 1 |
| Z | 0 | 0 | 1 | 1 | 0 | 1 |

## FIG. 17

FIG. 18

FIG. 19

FIG. 20